(19) Europäisches Patentamt / European Patent Office / Office européen des brevets

(11) **EP 2 140 928 B1**

(12) **EUROPEAN PATENT SPECIFICATION**

(45) Date of publication and mention
of the grant of the patent:
**20.07.2016 Bulletin 2016/29**

(21) Application number: **08711905.3**

(22) Date of filing: **25.02.2008**

(51) Int Cl.:
*C11D 3/04* *(2006.01)*  *B01D 65/06* *(2006.01)*
*C11D 7/18* *(2006.01)*  *C11D 7/26* *(2006.01)*
*C11D 17/08* *(2006.01)*  *C11D 3/12* *(2006.01)*
*C11D 3/02* *(2006.01)*  *C11D 3/39* *(2006.01)*
*C11D 7/10* *(2006.01)*  *C11D 7/20* *(2006.01)*
*C11D 11/00* *(2006.01)*  *C11D 3/20* *(2006.01)*
*B01D 65/02* *(2006.01)*

(86) International application number:
**PCT/JP2008/053143**

(87) International publication number:
**WO 2008/120509 (09.10.2008 Gazette 2008/41)**

(54) **CLEANING AGENT FOR SEPARATION MEMBRANE, PROCESS FOR PRODUCING THE CLEANING AGENT AND CLEANING METHOD**

WASCHMITTEL FÜR TRENNMEMBRAN, HERSTELLUNGSVERFAHREN DAFÜR UND WASCHVERFAHREN

AGENT DE LAVAGE POUR UNE MEMBRANE DE SÉPARATION, SON PROCÉDÉ DE FABRICATION ET PROCÉDÉ DE LAVAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.04.2007 JP 2007097153**

(43) Date of publication of application:
**06.01.2010 Bulletin 2010/01**

(73) Proprietor: **Asahi Kasei Chemicals Corporation Tokyo 101-8101 (JP)**
(72) Inventors:
• **GOJO, Yutaka**
  **Tokyo 100-8440 (JP)**
• **UEDA, Atsuyoshi**
  **Nara-shi, Nara 6308453 (JP)**
(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**EP-A1- 1 652 571**      **WO-A1-2005/005028**
**WO-A1-2006/012691**    **WO-A1-2007/119850**
**JP-A- 60 204 898**      **JP-A- 2004 249 258**
**JP-A- 2005 194 461**    **JP-A- 2006 055 784**
**US-A1- 2005 209 328**

Remarks:
The file contains technical information submitted after the application was filed and not included in this specification

## Description

Technical Field

The present invention relates to a separation membrane cleaning agent used for filtration treatment of drinking water, industrial water, river water, lake water, underground water, reservoir water, secondary effluent, waste water, sewage water or the like; a preparation process for preparing the cleaning agent; and a cleaning method.

Background Art

When membranes are used for filtering raw water such as drinking water, industrial water, river water, lake water, underground water, reservoir water, secondary effluent, waste water, or sewage water, substances suspended in the raw water or substances having a size greater than the pore size of the membrane (these substances will hereinafter be called "membrane fouling substances", collectively) are blocked by the membrane, form concentration polarization or cake layer, and clog the pores to increase filtration resistance and cause so-called membrane fouling. As constant flow rate operation is continued, the transmembrane pressure difference increases. When the transmembrane pressure difference reaches a predetermined value, it must be necessary to clean the separation membrane with a cleaning solution and restore the filtration flux to the original one.

It is the common practice to use an oxidizing agent such as hypochlorite and an alkali such as sodium hydroxide, or a mixture thereof for cleaning off membrane fouling substances derived from organic matters. As disclosed in Patent document 1, it is known that a cleaning method capable of oxidatively decomposing the membrane fouling substances derived from organic matters (which substances will hereinafter be called "organic fouling substances", simply) by utilizing a Fenton reaction involving hydrogen peroxide and a metal. Moreover, a cleaning agent and cleaning method for separation membrane which use a percarbonate and an iron compound are disclosed in Patent document 2. They are however inferior in the removing performance of organic fouling substances to the cleaning agent or method using a hypochlorite or the Fenton reaction involving hydrogen peroxide. In addition, an aqueous solution of the percarbonate has a high pH so that a large amount of the iron compound added together adheres to the surface of the separation membrane as ferric hydroxide. This also requires removal of membrane fouling substances derived from inorganic matters (which substances will hereinafter be called "inorganic fouling substances", simply). Deterioration of the separation membrane usually occurs in the cleaning solution used for cleaning the separation membrane, but it is known that use of a separation membrane composed mainly of a polyvinylidene fluoride (which may hereinafter be called "PVDF", simply) retards the deterioration.

It is known that as an acid cleaning agent, an organic acid such as oxalic acid or citric acid, or an inorganic acid such as hydrochloric acid, sulfuric acid or nitric acid, or a mixture thereof is effective against fouling due to inorganic matters such as iron and manganese. A separation membrane after filtration treatment usually includes therein organic and inorganic fouling substances as a mixture so that they are removed usually by both alkali cleaning and acid cleaning. Since the separation membrane is not cleaned completely by this method, some film fouling substances remain unremoved or it takes long hours for cleaning when alkali cleaning and acid cleaning are both performed. In addition to these problems, reaction heat or toxic gas is generated when these cleaning agents are brought into contact with the separation membrane. The cleaning agent must be washed off in a rinsing step with a large amount of water at the time of change with the other cleaning agent. This leads to problems such as use of a large amount of water, prolonged cleaning time, and generation of a chlorine gas due to incomplete rinsing.

As described above, cleaning is performed when the transmembrane pressure difference reaches a predetermined value, but cleaning is sometimes performed periodically at short intervals. Such cleaning is performed in short hours with a cleaning solution having a lower concentration than that used for the above-described cleaning. In this case, the membrane must be cleaned in a short time so that the cleaning agent employed for it contains only a hypochlorite or an acid. As a result, either the organic fouling substances or inorganic fouling substances cannot be removed completely.

On the other hand, when cleaning with a cleaning solution containing a hypochlorite, chlorine in the hypochlorite may react with an organic matter and produce trihalomethane or the like harmful for human health. To avoid such a problem, there is a demand for a chlorine-free cleaning solution.

Deterioration of the separation membrane occurs when it is brought into contact with chemicals. By using a separation membrane resistant to deterioration, a cleaning agent can be used over a wide range of concentrations and a high cleaning effect can be achieved in a short time.

Patent document 1:     Japanese Patent Application Laid-Open No. 277568/1998
Patent document 2:     Japanese Patent Application Laid-Open No. 2000-126560

EP 1652571 discloses a separation membrane aqueous cleaning pre-mix composition comprising hydroxydicarboxylic acid, hydrogen peroxide, activator selected from Fe-, Mn-, Cu-, Ni- and Co-salt, preferably Fe-salt, the concentration of hydrogen peroxide in the composition called pre-mix is from more than 5 to less than 25 wt.%.

Disclosure of Invention

Problems to be Solved by the Invention

An object of the present invention is to provide a separation membrane cleaning agent which can overcome the above-described conventional problems in cleaning the separation membrane used for filtration of drinking water, industrial water, river water, lake water, underground water, reservoir water, secondary effluent, waste water, sewage water, or the like so that time and an amount of water necessary for cleaning the separation membrane are both reduced, a risk to human health does not exist, and effective cleaning of the membrane can be conducted by a simple means; a process for preparing the cleaning agent; and a cleaning method.

Means for Solving the Problems

With a view to overcoming the above-described problems, the present inventors have continued an intensive investigation. As a result, it has been found that cleaning of a separation membrane with a cleaning agent containing a hydroxydicarboxylic acid has no adverse effect on the environment, does not need rinsing with water or two-stage cleaning which the conventional cleaning method requires, and can efficiently clean off organic and inorganic fouling substances in one step. It has also been found that a membrane module fouled with a very large amount of inorganic fouling substances can be cleaned with an acid without carrying out a rinsing step, leading to the completion of the present invention.

With regards to the separation membrane, in addition thereto, when the separation membrane is a porous membrane containing a PVDF resin, a crystallization degree of the PVDF resin is 50% or greater but not greater than 90%, and a product obtained by multiplying the crystallization degree of the PVDF resin by a specific surface area of the porous membrane is 300 ($\%\cdot m^2$/g) or greater but not greater than 2000 ($\%\cdot m^2$/g), deterioration of the membrane due to the cleaning agent used in the present invention hardly occurs, the cleaning agent can be used over a wide concentration range, and high cleaning capacity can be accomplished in a short time.

In the present invention, there are provided:

[1] A separation membrane cleaning agent comprising at least one hydroxydicarboxylic acid selected from the group consisting of malic acid, tartaric acid, tartronic acid, citramalic acid, dioxymaleic acid, and dioxymalonic acid; hydrogen peroxide; and a heavy metal compound,
wherein the amount of the hydroxydicarboxylic acid is from $1 \times 10^{-1}$ to $1 \times 10^4$ mol per mol of the heavy metal compound,
wherein the amount of hydrogen peroxide falls within a range of from $1 \times 10^{-3}$ to $1 \times 10^1$ mol/L;
wherein the amount of the heavy metal compound falls within a range of from $1 \times 10^{-5}$ to $1 \times 10^2$ mol per mol of hydrogen peroxide;
wherein the amount of the hydroxydicarboxylic acid is from $1 \times 10^{-4}$ to $1 \times 10^2$ mol per mol of the hydrogen peroxide, and
wherein the cleaning agent has a pH from 2 to 3.

[2] The cleaning agent according to item [1], wherein the heavy metal compound is at least one compound selected from the group consisting of chlorides, sulfides, and oxides of Fe, Mn, Co, Ni, Ti and Cu.

[3] A process for preparing the separation membrane cleaning agent as defined in item [1], comprising mixing hydrogen peroxide, a heavy metal compound, and at least one hydroxydicarboxylic acid selected from the group consisting of malic acid, tartaric acid, tartronic acid, citramalic acid, dioxymaleic acid, and dioxymalonic acid,
wherein the amount of the hydroxydicarboxylic acid is from $1 \times 10^{-1}$ to $1 \times 10^4$ mol per mol of the heavy metal compound,
wherein the amount of hydrogen peroxide falls within a range of from $1 \times 10^{-3}$ to $1 \times 10^1$ mol/L;
wherein the amount of the heavy metal compound falls within a range of from $1 \times 10^{-5}$ to $1 \times 10^2$ mol per mol of hydrogen peroxide;
wherein the amount of the hydroxydicarboxylic acid is from $1 \times 10^{-4}$ to $1 \times 10^2$ mol per mol of the hydrogen peroxide.

[4] The process for preparing a cleaning agent for separation membrane according to item [3], wherein the hydrogen peroxide is added after the heavy metal compound is dissolved in water.

[5] A method for cleaning a separation membrane comprising bringing the cleaning agent as defined in any one of items [1] and [2] and water into contact with the separation membrane to be cleaned.

[6] The cleaning method according to item [5], wherein the separation membrane is a porous membrane containing a polyvinylidene fluoride resin.

[7] The cleaning method according to item [5], wherein the contact step is performed by at least one method selected from the group consisting of dead-end filtration cleaning, recycle filtration cleaning, recycle non-permeation cleaning, immersion cleaning, backwash cleaning, backwash immersion cleaning and simultaneous air cleaning.

The term "cleaning agent for separation membrane" is used interchangeably with "separation membrane cleaning agent" and, as used herein, means an agent containing one or more compounds and to be used for cleaning a separation membrane for separating raw water including waste water or the like.

Advantageous Effects of the Invention

Cleaning of a filtering separation membrane with the cleaning agent according to the present invention enables simultaneous removal of organic and inorganic fouling substances and has a cleaning effect equal or superior to conventional cleaning methods such as alkali cleaning or acid cleaning. Even if a large amount of inorganic fouling substances adhere to the separation membrane, cleaning of the membrane with the cleaning agent according to the present invention may be followed directly by acid cleaning without inserting therebetween a rinsing step requiring a large amount of water and this involves no risk of generating reaction heat or a harmful gas. Thus, the cleaning agent according to the present invention has a high cleaning effect, while the cleaning method according to the present invention is economical because it can reduce time and amount of water necessary for cleaning, and is safe without a risk of generation of reaction heat or toxic gas.

The present invention (which will hereinafter be called "the present embodiment" simply) will next be described in detail.

Raw water related to the present embodiment includes, for example, drinking water, industrial water, river water, lake water, underground water, reservoir water, secondary effluent, waste water or sewage water. When such raw water is filtered through the separation membrane, the membrane is fouled with membrane fouling substances in the raw water and a transmembrane pressure difference increases during filtering operation continued at a constant flow rate. The separation membrane whose transmembrane pressure difference has reached a predetermined value must be cleaned and restored to its original filtration flux.

Substances which attach to the membrane and cause clogging can be classified roughly into organic matters and inorganic matters. For the removal of organic matters, it is effective to use an oxidizing agent such as hypochlorite and an alkali such as sodium hydroxide, or a mixture thereof and decompose them and remove the clogging. For the removal of inorganic matters, on the other hand, an acid-containing cleaning solution is usually employed. Mixing of the alkali cleaning solution and acid cleaning solution may generate a harmful gas or reaction heat. When both of these cleaning solutions are used, a step of rinsing the separation membrane with a large amount of water is required at solution changing time. In order to clean the membrane in a short time with a cleaning solution having a low concentration before the transmembrane pressure difference reaches a predetermined value, it is possible to continue stable cleaning operation by using either an oxidizing agent such as hypochlorite or an acid and remove either one of an organic or inorganic fouling substance.

In the present embodiment, organic and inorganic fouling substances attached to the separation membrane can be removed simultaneously by cleaning the membrane with a hydroxydicarboxylic-acid-containing cleaning agent for the separation membrane. In a more preferred aspect, the cleaning agent for the separation membrane according to the present embodiment comprises further hydrogen peroxide and a heavy metal compound. More specifically, when a ferrous compound ($Fe^{2+}$) and hydrogen peroxide are added to water containing an organic matter, a hydroxy radical ($HO\bullet$) is generated by the following reaction and the organic matter in water is oxidatively decomposed by this hydroxy radical.

$$H_2O_2 + Fe^{2+} \rightarrow HO\bullet + OH^- + Fe^{3+}$$

In cleaning the separation membrane, use of treatment in accordance with the Fenton reaction making use of hydrogen peroxide and metal ions can remove organic fouling substances. It cannot however remove inorganic fouling substance completely and, moreover the metal used for cleaning is fixed to the surface of the separation membrane and must be cleaned further with an acid. Owing to the hydroxydicarboxylic acid added to the agent, the heavy metal compound dissolves in an aqueous solution. It is not fixed to the surface of the membrane and can be cleaned off. The inorganic fouling substance present on the surface of the separation membrane can also be removed simultaneously. Two carboxylic acid groups of the hydroxydicarboxylic acid exhibit excellent removing performance of inorganic fouling substances in hydrogen peroxide and at the same time, the weak but constant reductive power of the OH groups of the dicarboxylic acid is presumed to enhance reduction of iron ions which has once been oxidized from $Fe^{2+}$ to $Fe^{3+}$ to $Fe^{2+}$ again. When the amount of the hydroxydicarboxylic acid is too small, the heavy metal does not dissolve completely and is fixed to the surface of the separation membrane, leading to insufficient cleaning. Too large amounts of the hydroxydicarboxylic acid, on the other hand, reduce the pH and lessen the cleaning effect of organic fouling substances available by the Fenton reaction.

In the case where a large amount of inorganic fouling substances adhere to the separation membrane and they cannot be removed completely therefrom, the membrane can be cleaned with an acid solution after cleaning with the cleaning agent according to the present embodiment without inserting a rinsing step requiring a large amount of water between these steps. This is accomplished because the cleaning agent according to the present embodiment does not contain a hypochlorite or an alkali such as sodium hydroxide so that neither harmful gas nor reaction heat is generated even by contact between the cleaning agent and the acid. Since the rinsing step with a large amount of water is omitted, cleaning time or using amount of water can be reduced and the cleaning method according to the present embodiment becomes an economical method. Also in the cleaning method in which the separation membrane is cleaned in a short time with the cleaning agent having a low concentration before its transmembrane pressure difference reaches a predetermined value, use of the cleaning agent according to the present embodiment enables simultaneous removal of organic and inorganic fouling substances which was previously impossible so that a very stable filtration operation can be continued compared with the conventional cleaning method.

The cleaning agent according to the present embodiment comprises hydrogen peroxide, a heavy metal compound and a hydroxydicarboxylic acid.

Although no particular limitation is imposed on the heavy metal compound to be used in the present embodiment, it is preferably at least one compound selected from the group consisting of chlorides, sulfides and oxides containing an Fe, Mn, Co, Ni, Ti or Cu element. The heavy metal compound to be used in the present embodiment is more preferably ferrous chloride from the standpoints of solubility in water, cost, and easy separation by filtration by the addition of an alkali such as sodium hydroxide to the cleaning solution after use.

According to the present invention the hydroxydicarboxylic acid to be used in the present embodiment, it is at least one acid selected from the group consisting of malic acid, tartaric acid, tartronic acid, citramalic acid, dioxymaleic acid and dioxymalonic acid. In the cleaning agent according to the present embodiment, the hydroxydicarboxylic acid may be mixed with another organic and/or inorganic acid.

In a preferred aspect, the cleaning agent according to the present embodiment is a water-containing cleaning agent. The cleaning agent according to the present embodiment comprises hydrogen peroxide in an amount ranging from $1 \times 10^{-3}$ to $1 \times 10^{1}$ mol/L. When the amount of the hydrogen peroxide is less than $1 \times 10^{-3}$ mol/L, the hydrogen peroxide is consumed completely prior to the completion of the removal of fouling substances, leading to deterioration of the cleaning effect. Amounts of the hydrogen peroxide greater than $1 \times 10^{1}$ mol/L, on the other hand, do not pose any problem in the cleaning effect, but waste liquid treatment using a large amount of a reducing agent is required in order to treat much hydrogen peroxide which has remained after cleaning. The concentration of hydrogen peroxide is therefore more preferably from $1 \times 10^{-1}$ to 3 mol/L. No particular limitation is imposed on a method of supplying hydrogen peroxide to be used for the cleaning agent according to the present embodiment, it may be supplied as is or alternatively, a compound which generates hydrogen peroxide in an aqueous solution, for example, sodium percarbonate or sodium perborate may be used.

The amount of the hydroxydicarboxylic acid in the cleaning agent according to the present embodiment is from $1 \times 10^{-1}$ to $1 \times 10^{4}$ mol per mol of the heavy metal compound. When the amount of the hydroxydicarboxylic acid is less than $1 \times 10^{-1}$ mol, there is a high possibility of the metal being precipitated during cleaning. When the amount of the hydroxydicarboxylic acid is greater than $1 \times 10^{4}$ mol, on the other hand, the hydroxydicarboxylic acid itself becomes a substance to be oxidatively decomposed and satisfactory removing performance of organic fouling substances cannot be achieved. Moreover, an amount of the hydroxydicarboxylic acid in the cleaning solution according to the present embodiment is from $1 \times 10^{-4}$ to $1 \times 10^{2}$ mol per mol of the hydrogen peroxide. When the amount is less than $1 \times 10^{-4}$ mol, the removing performance of membrane fouling substances derived from inorganic matters is not sufficient. When the amount exceeds $1 \times 10^{2}$ mol, on the other hand, the pH of the cleaning solution becomes too small and the cleaning effect brought by the Fenton reaction decreases, resulting in deterioration in the cleaning performance of membrane fouling substances derived from organic matters. The cleaning solution has a pH of from 2 to 3, preferably from 2 to 2.5, more preferably from 2.2 to 2.4, still more preferably 2.3.

The cleaning solution according to the present embodiment may comprise an additive for enhancing cleaning such as surfactant or chelating agent. Specific examples thereof include anionic surfactants such as soaps, higher alcohol sulfates, alkylbenzene sulfonates, alkyl naphthalene sulfonates, and higher alcohol phosphates; cationic surfactants such as primary amine salts, secondary amine salts, tertiary amine salts and quaternary ammonium salts; amphoteric surfactants, e.g., amine oxides such as alkyldimethylamine oxide, alkyldimethylamino fatty acid betaines and alkylcarboxymethylhydroxyethylimidazolium betaines; nonionic surfactants such as polyoxyethylene alkylphenyl ethers, polyoxypropylene alkylphenyl ethers, polyoxyethylene alkyl ethers, polyoxyethylene alkyl esters, polyethylene glycol alkyl esters, ethylene oxide adduct of polypropylene glycol, and propylene oxide adduct of polypropylene glycol; and chelating agents such as sodium salts, potassium salts, lithium salts, ammonium salts, amine salts and alkanolamine salts of at least one of 1-hydroxyethylidene-1,1-diphosphonic acid, aminotrimethylenephosphonic acid, ethylenediaminetetramethylenephosphonic acid, hexamethylenediaminetetramethylenephosphonic acid, diethylenetriaminepentamethylenephosphonic acid nitrilotriacetic acid (NTA), ethylenediaminetetraacetic acid (EDTA), diethylenetriaminepentaacetic acid (DTPA), hydroxyethylethylenediaminetriacetic acid (HEDTA) and triethylenetetraminehexaacetic acid (TTHA).

The cleaning agent according to the present embodiment can be prepared by mixing the hydrogen peroxide, heavy metal compound and hydroxydicarboxylic acid in a solvent. The mixing in the preparation process according to the present embodiment may be performed in a known manner. The agent may be prepared only by mixing. The solvent to be used in the present embodiment is preferably water in consideration of the influence on the environment. In the preparation process of the cleaning agent according to the present embodiment, in order to remove organic fouling substances and prevent the heavy metal compound in the cleaning solution from adhering to the membrane surface, the hydrogen peroxide is preferably added after complete dissolution of the heavy metal compound, preferably iron ions which are heavy metal ions.

In the cleaning method of the separation membrane by using the cleaning agent according to the present embodiment, the cleaning solution according to the present embodiment may be brought into contact with the separation membrane by passing or not passing the cleaning solution in the cross-sectional direction of the membrane. When the cleaning solution is passed in the cross-sectional direction of the membrane, it may be passed either from the membrane surface on the raw water side or from the membrane surface on the filtration side.

Specific examples of the cleaning method include a method of cleaning while supplying the cleaning solution from the raw water side and causing all the solution to pass through the membrane (dead-end filtration cleaning), and a method of circulating the cleaning solution from the raw water side and cleaning while filtering (recycle filtration cleaning) or without filtering (recycle non-permeation cleaning) the solution. Additional examples of the cleaning method include a method of filling the separation membrane with the cleaning solution and immersing it therein for a predetermined time (immersion cleaning), a method of backwashing while feeding the cleaning solution from the filtration side (backwash cleaning), a method of accumulating, in the separation membrane, the cleaning solution reversed from the filtration side and immersing the membrane in the solution for a predetermined time (backwash immersion cleaning). These methods may be used either singly or in combination. Further examples include a method of introducing air bubbles on the raw water side simultaneously with each of the above-described cleaning methods (simultaneous air cleaning) and a method of introducing air bubbles on the raw water side following each of these cleaning methods. In any cleaning method, the separation membrane is not clogged with the heavy metal compound because the compound is dissolved completely.

Although the material of the separation membrane to be cleaned by the cleaning method according to the present embodiment is not particularly limited, a polyvinylidene fluoride (PVDF) film and a polysulfone film are preferred, more preferably a polyvinylidene fluoride film. The kind of the separation membrane is not particularly limited. For example, reverse osmosis membrane, NF membrane, ultrafiltration (UF) membrane, and microfiltration (MF) membrane are preferred. It is however noted that for the cleaning of a reverse osmosis membrane, recycle non-permeation cleaning is employed in order to avoid the possibility of the membrane being clogged with the heavy metal compound dissolved in the cleaning solution.

A hydroxy radical (HO•) generated from the cleaning agent according to the present embodiment is highly oxidative so that it might severely deteriorate the separation membrane. In the present embodiment, a polyvinylidene fluoride film is used as a preferable separation membrane. When a porous membrane characterized in that the polyvinylidene fluoride film has a crystallization degree of 50% or greater but not greater than 90% and a product obtained by multiplying the crystallization degree by a specific surface area of the porous membrane is 300 ($\%•m^2/g$) or greater but not greater than 2000 ($\%•m^2/g$) is used as the separation membrane, the cleaning agent according to the present embodiment does not deteriorate the separation membrane itself, can be used over a wide range of concentrations and can exhibit high cleaning effects in short hours. Deterioration of the PVDF resin due to exposure to chemicals is presumed to occur from an amorphous portion of it responsible for the flexibility of the resin. When the PVDF resin has a crystallization degree of 50% or greater but not greater than 90%, the whole porous membrane does not become brittle easily and has high rigidity even if the amorphous portion decomposes and deteriorates by the cleaning chemical. Based on these findings, in the porous membrane excellent in water permeation and chemical resistance, the product obtained by multiplying the crystallization degree by a specific surface area of the porous membrane must fall within the above-described range, preferably 300 ($\%•m^2/g$) or greater but not greater than 1500 ($\%•m^2/g$), more preferably 300 ($\%•m^2/g$)

or greater but not greater than 1000 (%•m$^2$/g). The porous membrane within the above-described range has a water permeation capacity suited for filtration and does not easily deteriorate even when exposed to chemicals, because a contact area between the porous membrane and a cleaning chemical is not too large. To further improve chemical resistance, the total amount of β-form crystals and γ-form crystals in the crystal portion of the PVDF resin constituting the porous membrane is preferably 30% or less, more preferably 25% or less, still more preferably 20% or less based on the total amount of the crystal portion. As the crystal structure of a PVDF resin, three structures, that is, α-form, β-form and γ-form structures are known and a PVDF resin having a crystallization degree of 50% or greater but not greater than 90% may contain these three structures in its crystal portion. Since the β-form and γ-form crystal structures are thermodynamically unstable, the PVDF resin containing them much in the crystals thereof is presumed to have a portion susceptible to deterioration due to chemicals at the boundary between the crystal portion and amorphous portion. This may lead to deterioration in chemical resistance of the whole porous membrane. A porous membrane having a smaller content of β-form crystals and γ-form crystals therefore does not undergo deterioration due to chemicals. Although no particular limitation is imposed on the lower limit of the total amount of β-form crystals and γ-form crystals, the total amount closer to 0% is preferred. The PVDF resin may have, in the crystal portion thereof, either one of β-form crystal structure and γ-form crystal structure.

Examples

The present invention will hereinafter be described in further detail by Examples and Comparative Examples. The following are various measurement methods employed in Examples and Comparative Examples.

As a separation membrane module, employed is an external pressure type module which has, in its ABS casing having a length of 2 m and a diameter of 15.24 cm (6 inches), a hollow fiber microfiltration (MF) membrane manufactured by Asahi Kasei Chemicals, having an average pore size of 0.1 μm, and made of polyvinylidene fluoride (PVDF). The membrane area of the module is 50 m$^2$.

In Examples and Comparative examples, constant flow rate filtration in which filtration was performed while maintaining a predetermined filtration flux was employed in a cross flow filtration mode.

For cleaning, a separation membrane module used for filtration for a predetermined term and having a transmembrane pressure difference increased to 200 kPa was used.

In the present embodiment, a predetermined amount of a cleaning solution was poured into the separation membrane module and the separation membrane was cleaned by recycle filtration cleaning. A filtration capacity was evaluated based on a water permeation capacity and the water permeation capacity was calculated from a ratio to an initial transmembrane pressure difference.

Note that the cleaning step and separation membrane described in these examples are provided only for illustrative purposes and are not intended to limit the carrying out of the present invention.

Chemical resistance test of the separation membrane was performed in the following manner. After immersion of the membrane in a cleaning solution for a predetermined time, tensile test was performed and tensile elongation at break was measured before and after immersion. Elongation retention (%) was determined, in accordance with the following formula, from elongation at break (E0) before immersion and elongation at break (En) after deterioration due to chemical exposure by immersion for n days.

$$\text{Elongation retention (\%)} = (En/E0) \times 100$$

Tensile elongation was measured using "Shimadzu Autograph AGS-H" (trade name; product of Shimadzu Corp) at a grip distance of 50 mm and a pulling rate of 100 mm/min.

Example 1

A membrane module whose transmembrane pressure difference reached 200 kPa after 6-month operation using, as raw water, surface water of river having a turbidity of from 1 to 5 mg/L (based on the kaolin standard solution produced by Kanto Chemical) and a total organic carbon (TOC) of from 0.5 mg/L to 1.5 mg/L was cleaned as described below.

A cleaning solution was prepared by adding, to an aqueous hydrogen peroxide solution (0.88 mol/L), ferrous chloride and malic acid to give concentrations of 0.0008 mol/L and 0.05 mol/L, respectively. The membrane module was subjected to recycle filtration cleaning with it for 6 hours. The cleaning solution was then removed from the module and the separation membrane was rinsed with 500 L of ultrafiltration water for 2.5 hours.

As a result of the cleaning by the above-described method, supposing that the membrane filtration capacity before use was 100%, the membrane recovered 100% of the membrane filtration capacity which had once reduced to 10% of it before cleaning. The total cleaning time in this cleaning method was 8.5 hours. During cleaning, generation of neither a chlorine gas nor reaction heat was observed.

The cleaning allowed filtration operation through the resulting membrane for further 6 months. In the present embodiment, the filtration capacity was evaluated by a term until the pressure during the filtration operation increased to 200 kPa.

Example 2

For cleaning the fouled membrane module of Example 1, a cleaning solution was prepared by adding, to an aqueous hydrogen peroxide solution (0.88 mol/L), ferrous chloride and tartaric acid to give concentrations of 0.0008 mol/L and 0.05 mol/L, respectively. The membrane module was subjected to recycle filtration cleaning with it for 6 hours. The cleaning solution was then removed from the module and the separation membrane was rinsed with 500 L of ultrafiltration water for 2.5 hours.

As a result of the cleaning by the above-described method, supposing that the membrane filtration capacity before use was 100%, the membrane recovered 100% of the membrane filtration capacity which had once reduced to 10% of it before cleaning. The total cleaning time in this cleaning method was 8.5 hours. During cleaning, generation of neither a chlorine gas nor reaction heat was observed.

The cleaning allowed filtration operation through the resulting membrane for further 6 months.

Example 3

For cleaning the fouled membrane module of Example 1, a cleaning solution was prepared by adding, to an aqueous hydrogen peroxide solution (0.88 mol/L), ferrous chloride and tartronic acid to give concentrations of 0.0008 mol/L and 0.05 mol/L, respectively. The membrane module was subjected to recycle filtration cleaning with it for 6 hours. The cleaning solution was then removed from the module and the separation membrane was rinsed with 500 L of ultrafiltration water for 2.5 hours.

As a result of the cleaning by the above-described method, supposing that the membrane filtration capacity before use was 100%, the membrane recovered 100% of the membrane filtration capacity which had once reduced to 10% of it before cleaning. The total cleaning time in this cleaning method was 8.5 hours. During cleaning, generation of neither a chlorine gas nor reaction heat was observed.

The cleaning allowed filtration operation through the resulting membrane for further 6 months.

Example 4

For cleaning the fouled membrane module of Example 1, a cleaning solution was prepared by adding, to an aqueous hydrogen peroxide solution (0.88 mol/L), ferrous chloride and citramalic acid to give concentrations of 0.0008 mol/L and 0.05 mol/L, respectively. The membrane module was subjected to recycle filtration cleaning for 6 hours. The cleaning solution was then removed from the module and the separation membrane was rinsed with 500 L of ultrafiltration water for 2.5 hours.

As a result of the cleaning by the above-described method, supposing that the membrane filtration capacity before use was 100%, the membrane recovered 100% of the membrane filtration capacity which had once reduced to 10% of it before cleaning. The total cleaning time in this cleaning method was 8.5 hours. During cleaning, generation of neither a chlorine gas nor reaction heat was observed.

The cleaning allowed filtration operation through the resulting membrane for further 6 months.

Example 5

For cleaning the fouled membrane module of Example 1, a cleaning solution was prepared by adding, to an aqueous hydrogen peroxide solution (0.88 mol/L), ferrous chloride and dioxymaleic acid to give concentrations of 0.0008 mol/L and 0.05 mol/L, respectively. The membrane module was subjected to recycle filtration cleaning with it for 6 hours. The cleaning solution was then removed from the module and the separation membrane was rinsed with 500 L of ultrafiltration water for 2.5 hours.

As a result of the cleaning by the above-described method, supposing that the membrane filtration capacity before use was 100%, the membrane recovered 100% of the membrane filtration capacity which had once reduced to 10% of it before cleaning. The total cleaning time in this cleaning method was 8.5 hours. During cleaning, generation of neither a chlorine gas nor reaction heat was observed.

The cleaning allowed filtration operation through the resulting membrane for further 6 months.

Example 6

For cleaning the fouled membrane module of Example 1, a cleaning solution was prepared by adding, to an aqueous hydrogen peroxide solution (0.88 mol/L), ferrous chloride and dioxymalonic acid to give concentrations of 0.0008 mol/L and 0.05 mol/L, respectively. The membrane module was subjected to recycle filtration cleaning with it for 6 hours. The cleaning solution was then removed from the module and the separation membrane was rinsed with 500 L of ultrafiltration water for 2.5 hours.
As a result of the cleaning by the above-described method, supposing that the membrane filtration capacity before use was 100%, the membrane recovered 100% of the membrane filtration capacity which had once reduced to 10% of it before cleaning. The total cleaning time in this cleaning method was 8.5 hours. During cleaning, generation of neither a chlorine gas nor reaction heat was observed.
The cleaning allowed filtration operation through the resulting membrane for further 6 months.

Comparative Example 1

For cleaning the fouled membrane module of Example 1, an aqueous mixed solution containing 0.08 mol/L of nitric acid and 0.06 mol/L of oxalic acid was prepared as a cleaning solution. The membrane module was subjected to recycle filtration cleaning with it for 2 hours. The cleaning solution was then removed from the module and the separation membrane was rinsed with 500 L of ultrafiltration water for 2.5 hours, whereby the membrane became pH 6. The pH not greater than 6 because of insufficient rinsing with water may be a cause for generation of a chlorine gas or reaction heat. Then, the membrane was subjected to recycle filtration cleaning for 8 hours with an aqueous mixed solution prepared to contain 0.13 mol/L of sodium hypochlorite and 0.25 mol/L of sodium hydroxide. The aqueous mixed solution was removed from the module and the separation membrane was then washed with 500 L of ultrafiltration water for 2.5 hours.
As a result of the cleaning by the above-described method, supposing that the membrane filtration capacity before use was 100%, the membrane recovered 90% of the membrane filtration capacity which had once reduced to 10% of it before cleaning. The total cleaning time in this cleaning method was 15 hours. The amount of water used for rinsing was twice as much as that required for the cleaning solution described in each Example of the present embodiment.
Filtration operation was performed with the separation membrane thus cleaned. Then, the pressure increased to 200 kPa after 4-month operation.

Comparative Example 2

For cleaning the fouled membrane module of Example 1, an aqueous mixed solution was prepared as a cleaning solution by adding, to an aqueous hydrogen peroxide solution (0.88 mol/L), ferrous chloride to give a concentration of 0.0008 mol/L and the membrane module was subjected to recycle filtration cleaning with it for 6 hours. The aqueous mixed solution was then removed from the module and the separation membrane was rinsed with 500 L of ultrafiltration water for 2.5 hours.
As a result of the cleaning by the above-described method, supposing that the membrane filtration capacity before use was 100%, the membrane recovered 70% of the membrane filtration capacity which had once reduced to 10% of it before cleaning. Such low recovery was presumed to occur because absence of an acid in the cleaning solution led to incomplete removal of inorganic fouling substances from the separation membrane. The total cleaning time in this cleaning method was 8.5 hours.
Filtration operation was performed with the separation membrane thus cleaned. Then, the pressure increased to 200 kPa after 2-month operation.

Comparative Example 3

For cleaning the fouled membrane module of Example 1, an aqueous hydrogen peroxide solution (0.88 mol/L) was prepared as a cleaning solution. The membrane module was subjected to recycle filtration cleaning with it for 6 hours. The aqueous mixed solution was then removed from the module and rinsed with 500 L of ultrafiltration water for 2.5 hours.
As a result of the cleaning by the above-described method, supposing that the membrane filtration capacity before use was 100%, the membrane recovered 65% of the membrane filtration capacity which had once reduced to 10% of it before cleaning. The separation membrane was not cleaned completely by an aqueous solution containing only hydrogen peroxide. The total cleaning time of this cleaning method was 8.5 hours.
Filtration operation was performed with the separation membrane thus cleaned. Then, the pressure increased to 200 kPa after 2-month operation.

Comparative Example 4

For cleaning the fouled membrane module of Example 1, an aqueous mixed solution containing 0.16 mol/L of sodium percarbonate and 0.0008 mol/L of ferrous chloride was prepared as a cleaning solution. The membrane was subjected to recycle filtration cleaning with it for 6 hours. The aqueous mixed solution was then removed from the module and the separation membrane was washed with 500 L of ultrafiltration water for 2.5 hours.
As a result of the cleaning by the above-described method, supposing that the membrane filtration capacity before use was 100%, the membrane recovered 82% of the membrane filtration capacity which had once reduced to 10% of it before cleaning. The separation membrane was not cleaned completely presumably because a portion of the ferrous chloride which had remained undissolved owing to the pH of the cleaning solution as high as from 10 to 11 adhered to the separation membrane during cleaning. The total cleaning time of this cleaning method was 8.5 hours.
Filtration operation was performed using the separation membrane thus cleaned. Then, the pressure thereof increased to 200 kPa after 4-month operation.

Comparative Example 5

For cleaning the fouled membrane module of Example 1, an aqueous mixed solution was prepared as a cleaning solution by adding, to an aqueous hydrogen peroxide solution (0.88 mol/L), ferrous chloride and lactic acid to give concentrations of 0.0008 mol/L and 0.05 mol/L, respectively. The membrane was subjected to recycle filtration cleaning with it for 6 hours. The aqueous mixed solution was then removed from the module and the separation membrane was washed with 500 L of ultrafiltration water for 2.5 hours.
As a result of the cleaning by the above-described method, supposing that the membrane filtration capacity before use was 100%, the membrane recovered 87% of the membrane filtration capacity which had once reduced to 10% of it before cleaning. The total cleaning time of this cleaning method was 8.5 hours. The cleaning was performed using lactic acid which was one of hydroxymonocarboxylic acids, however, resulting in incomplete recovery of the water permeation capacity.
Filtration operation was performed using the separation membrane thus cleaned. Then, the pressure increased to 200 kPa after 4-month operation.

Comparative Example 6

For cleaning the fouled membrane module of Example 1, an aqueous solution was prepared as a cleaning solution, by adding, to an aqueous hydrogen peroxide solution (0.88 mol/L), ferrous chloride and citric acid to give concentrations of 0.0008 mol/L and 0.05 mol/L, respectively. The membrane was subjected to recycle filtration cleaning with it for 6 hours. The aqueous solution was then removed from the module and the separation membrane was rinsed with 500 L of ultrafiltration water for 2.5 hours.
As a result of the cleaning by the above-described method, supposing that the membrane filtration capacity before use was 100%, the membrane recovered 88% of the membrane filtration capacity which had once reduced to 10% of it before cleaning. The total cleaning time of this cleaning method was 8.5 hours. The cleaning was performed using citric acid which was one of hydroxytricarboxylic acids, however, resulting in incomplete recovery of the water permeation capacity.
Filtration operation was performed using the separation membrane thus cleaned. Then, the pressure thereof increased to 200 kPa after 4-month operation.

Comparative Example 7

For cleaning the fouled membrane module of Example 1, an aqueous solution was prepared as a cleaning solution by adding, to an aqueous hydrogen peroxide solution (0.88 mol/L), ferrous chloride and oxalic acid to give concentrations of 0.0008 mol/L and 0.05 mol/L, respectively. The membrane was subjected to recycle filtration cleaning with it for 6 hours. The aqueous solution was then removed from the module and the separation membrane was rinsed with 500 L of ultrafiltration water for 2.5 hours.
As a result of the cleaning by the above-described method, supposing that the membrane filtration capacity before use was 100%, the membrane recovered 88% of the membrane filtration capacity which had once reduced to 10% of it before cleaning. The total cleaning time of this cleaning method was 8.5 hours. The cleaning was performed using citric acid which was one of OH-free dicarboxylic acids, however, resulting in incomplete recovery of the water permeation capacity.
Filtration operation was performed using the separation membrane thus cleaned. Then, the pressure increased to 200 kPa after 4-month operation.

Comparative Example 8

For cleaning the fouled membrane module of Example 1, an aqueous solution was prepared as a cleaning solution by adding, to an aqueous hydrogen peroxide solution (0.88 mol/L), ferrous chloride and fumaric acid to give concentrations of 0.0008 mol/L and 0.05 mol/L, respectively. The membrane was subjected to recycle filtration cleaning with it for 6 hours. The aqueous solution was then removed from the module and the separation membrane was washed with 500 L of ultrafiltration water for 2.5 hours.

As a result of the cleaning by the above-described method, supposing that the membrane filtration capacity before use was 100%, the membrane recovered 83% of the membrane filtration capacity which had once reduced to 10% of it before cleaning. The total cleaning time of this cleaning method was 8.5 hours. The cleaning was performed using fumaric acid which was one of OH-free dicarboxylic acids, however, resulting in incomplete recovery of the water permeation capacity.

Filtration operation was performed using the separation membrane thus cleaned. The pressure increased to 200 kPa after 4-month operation.

Comparative Example 9

For cleaning the fouled membrane module of Example 1, an aqueous solution was prepared by adding, to an aqueous hydrogen peroxide solution (0.88 mol/L), ferrous chloride and citric acid to give concentrations of 0.0008 mol/L and 0.05 mol/L, respectively. The membrane was subjected to recycle filtration cleaning with it for 10 hours. The aqueous solution was then removed from the module and the membrane was washed with 500 L of ultrafiltration water for 2.5 hours.

As a result of the cleaning by the above-described method, supposing that the membrane filtration capacity before use was 100%, the membrane recovered 88% of the membrane filtration capacity which had once reduced to 10% of it before cleaning. The total cleaning time of this cleaning method was 12.5 hours. The cleaning was performed for prolonged hours by using citric acid which was one of hydroxytricarboxylic acids, however, resulting in incomplete recovery of the water permeation capacity.

Filtration operation was performed using the separation membrane thus cleaned. Then, the pressure

Table 1

| | Example 1 | Example 2 | Example 3 | Example 4 | Example 5 | Example 6 |
|---|---|---|---|---|---|---|
| Hydrogen peroxide solution | 0.88 mol/L | 0.88 mol/L | 0.88 mol/L | 0.88 mol/L | 0.88 mol/L | 0.88 mol/L |
| Sodium percarbonate | - | - | - | - | - | - |
| Sodium hydroxide | - | - | - | - | - | - |
| Malic acid | 0.05 mol/L | - | - | - | - | - |
| Tartaric acid | - | 0.05 mol/L | - | - | - | - |
| Tartronic acid | - | - | 0.05 mol/L | - | - | - |
| Citramalic acid | - | - | - | 0.05 mol/L | - | - |
| Dioxymaleic acid | - | - | - | - | 0.05 mol/L | - |
| Dioxymalonic acid | - | - | - | - | - | 0.05 mol/L |
| Ferrous chloride | 0.0008 mol/L | 0.0008 mol/L | 0.0008 mol/L | 0.0008 mol/L | 0.0008 mol/L | 0.0008 mol/L |
| Water permeation capacity before cleaning | 10% | 10% | 10% | 10% | 10% | 10% |
| Water permeation capacity after cleaning | 100% | 100% | 100% | 100% | 100% | 100% |
| Total cleaning time | 8.5 hr | 8.5 hr | 8.5 hr | 8.5 hr | 8.5 hr | 8.5 hr |

|  | Comp. Ex. 1 | Comp. Ex. 2 | Comp. Ex. 3 | Comp. Ex. 4 |
|---|---|---|---|---|
| Hydrogen peroxide solution | - | 0.88 mol/L | 0.88 mol/L | - |
| Sodium percarbonate | - | - | - | 0.16 mol/L |
| Sodium hydroxide | 0.25 mol/L | - | - | - |
| Malic acid | - | - | - | - |
| Tartaric acid | - | - | - | - |
| Lactic acid | - | - | - | - |
| Citric acid | - | - | - | - |
| Oxalic acid | 0.06 mol/L | - | - | - |
| Nitric acid | 0.08 mol/L | - | - | - |
| Fumaric acid | - | - | - | - |
| Sodium hypochlorite | 0.13 mol/L | - | - | - |
| Ferrous chloride | - | 0.0008 mol/L | - | 0.0008 mol/L |
| Water permeation capacity before cleaning | 10% | 10% | 10% | 10% |
| Water permeation capacity after cleaning | 90% | 70% | 65% | 82% |
| Total cleaning time | 15 hr | 8.5 hr | 8.5 hr | 8.5 hr |

|  | Comp. Ex. 5 | Comp. Ex. 6 | Comp. Ex. 7 | Comp. Ex. 8 | Comp. Ex. 9 |
|---|---|---|---|---|---|
| Hydrogen peroxide solution | 0.88 mol/L | 0.88 mol/L | 0.88 mol/L | 0.88 mol/L | 0.88 mol/L |
| Sodium percarbonate | - | - | - | - | - |
| Sodium hydroxide | - | - | - | - | - |
| Malic acid | - | - | - | - | - |
| Tartaric acid | - | - | - | - | - |
| Lactic acid | 0.05 mol/L | - | - | - | - |
| Citric acid | - | 0.05 mol/L | - | - | 0.05 mol/L |
| Oxalic acid | - | - | 0.05 mol/L | - | - |
| Fumaric acid | - | - | - | 0.05 mol/L | - |
| Sodium hypochlorite | - | - | - | - | - |
| Ferrous chloride | 0.0008 mol/L | 0.0008 mol/L | 0.0008 mol/L | 0.0008 mol/L | 0.0008 mol/L |
| Water permeation capacity before cleaning | 10% | 10% | 10% | 10% | 10% |
| Water permeation capacity after cleaning | 87% | 88% | 88% | 83% | 88% |
| Total cleaning time | 8.5 hr | 8.5 hr | 8.5 hr | 8.5 hr | 12.5 hr |

The results shown in Table 1 have revealed that the cleaning agents according to the present embodiment containing hydrogen peroxide, ferrous chloride which is a heavy metal compound, and a hydroxydicarboxylic acid show excellent effects of cleaning the separation membrane.

Example 7

A porous membrane made of polyvinylidene fluoride (PVDF) whose crystallization degree was 58 (%), product obtained by multiplying the crystallization degree by specific surface area of the porous membrane was 562 (%·m$^2$/g), and proportion of β type crystals was 4% was used. The membrane was immersed in a cleaning solution prepared by adding, to an aqueous hydrogen peroxide solution (0.88 mol/L), ferrous chloride and malic acid to give concentrations of 0.0008 mol/L and 0.05 mol/L, respectively, for 1 day, 5 days, 7 days and 20 days. After immersion for those says, the separation membrane was taken out from the cleaning solution, followed by sufficient rinsing with water. The tensile test was then performed. The results are shown in Table 2.

Comparative Example 10

A porous membrane made of polyvinylidene fluoride (PVDF) whose crystallization degree was 71 (%), product obtained by multiplying the crystallization degree by specific surface area of the porous membrane was 2899 (%·m$^2$/g), and proportion of β type crystals was 44% was used. The membrane was immersed in a cleaning solution prepared by adding, to an aqueous hydrogen peroxide solution (0.88 mol/L), ferrous chloride and malic acid to give concentrations of 0.0008 mol/L and 0.05 mol/L, respectively, for 1 day, 5 days, 7 days and 20 days. After immersion for those says, the separation membrane was taken out from the cleaning solution, followed by sufficient rinsing with water. The tensile test was then performed. The results are shown in Table 2.

[Table 2]

|  | Example 7 | Comparative Example 10 |
|---|---|---|
| 0 Day | 100% | 100% |
| 1 Day | 100% | 95% |
| 5 Days | 100% | 83% |
| 7 Days | 100% | 82% |
| 20 Days | 97% | 41% |

According to the results shown in Table 2, almost no deterioration was observed from the separation membrane made of polyvinylidene fluoride obtained in Example 7 whose product obtained by multiplying the crystallization degree by Specific surface area of the porous membrane was 300 (%·m$^2$/g) or greater but not greater than 2000 (%·m$^2$/g) even if it was cleaned with the cleaning agent of the present embodiment.

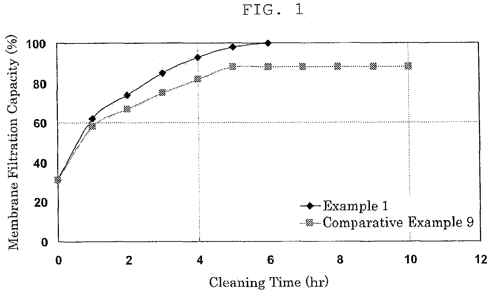

FIG. 1 shows the relationship between recovery of water permeation and cleaning time of a separation membrane with the cleaning agent (Example 1) containing hydrogen peroxide, malic acid which is a hydroxydicarboxylic acid, and ferrous chloride, among the cleaning results of the separation membranes with the cleaning agents of the present embodiment. Note that FIG. 1 also includes the results of Comparative Example 9 for comparison. As is apparent from the results shown in FIG. 1, the membrane cleaned with the cleaning agent according to the present embodiment showed rapid 100 percent recovery of the filtration capacity compared with that of Comparative Example 9. The membrane cleaned with the cleaning agent of Comparative Example 9 did not show 100 percent recovery even after cleaning for longer hours. Industrial Applicability

The cleaning agent according to the present invention is suited for use in the fields which need cleaning of a membrane for removing therefrom clogging substances during membrane filtration using, as raw water, drinking water, industrial water, river water, lake water, groundwater, reservoir water, secondary effluent, waste water, sewage water or the like.

Brief Description of the Drawings

FIG. 1 shows, among the cleaning results of a separation membrane with cleaning agents according to the present embodiment, the results on the relationship between recovery of water permeation and cleaning time of a separation membrane with a cleaning agent (Example 1) containing hydrogen peroxide, malic acid which is a hydroxydicarboxylic acid, and ferrous chloride, as well as the results of Comparative Example 6.

**EP 2 140 928 B1**

**Claims**

1. A separation membrane cleaning agent comprising at least one hydroxydicarboxylic acid selected from the group consisting of malic acid, tartaric acid, tartronic acid, citramalic acid, dioxymaleic acid, and dioxymalonic acid; hydrogen peroxide; and a heavy metal compound,

   wherein the amount of the hydroxydicarboxylic acid is from $1 \times 10^{-1}$ to $1 \times 10^4$ mol per mol of the heavy metal compound,

   wherein the amount of hydrogen peroxide falls within a range of from $1 \times 10^{-3}$ to $1 \times 10^1$ mol/L;

   wherein the amount of the heavy metal compound falls within a range of from $1 \times 10^{-5}$ to $1 \times 10^2$ mol per mol of hydrogen peroxide;

   wherein the amount of the hydroxydicarboxylic acid is from $1 \times 10^{-4}$ to $1 \times 10^2$ mol per mol of the hydrogen peroxide, and

   wherein the cleaning agent has a pH from 2 to 3.

2. The cleaning agent according to claim 1, wherein the heavy metal compound is at least one compound selected from the group consisting of chlorides, sulfides, and oxides of Fe, Mn, Co, Ni, Ti and Cu.

3. A process for preparing the separation membrane cleaning agent as defined in claim 1, comprising mixing hydrogen peroxide, a heavy metal compound, and at least one hydroxydicarboxylic acid selected from the group consisting of malic acid, tartaric acid, tartronic acid, citramalic acid, dioxymaleic acid, and dioxymalonic acid,

   wherein the amount of the hydroxydicarboxylic acid is from $1 \times 10^{-1}$ to $1 \times 10^4$ mol per mol of the heavy metal compound,

   wherein the amount of hydrogen peroxide falls within a range of from $1 \times 10^{-3}$ to $1 \times 10^1$ mol/L;

   wherein the amount of the heavy metal compound falls within a range of from $1 \times 10^{-5}$ to $1 \times 10^2$ mol per mol of hydrogen peroxide;

   wherein the amount of the hydroxydicarboxylic acid is from $1 \times 10^{-4}$ to $1 \times 10^2$ mol per mol of the hydrogen peroxide.

4. The process for preparing a cleaning agent for separation membrane according to claim 3, wherein the hydrogen peroxide is added after the heavy metal compound is dissolved in water.

5. A method for cleaning a separation membrane comprising bringing the cleaning agent as defined in any one of claims 1 and 2 and water into contact with the separation membrane to be cleaned.

6. The cleaning method according to claim 5, wherein the separation membrane is a porous membrane containing a polyvinylidene fluoride resin.

7. The cleaning method according to claim 5, wherein the contact step is performed by at least one method selected from the group consisting of dead-end filtration cleaning, recycle filtration cleaning, recycle non-permeation cleaning, immersion cleaning, backwash cleaning, backwash immersion cleaning and simultaneous air cleaning.

**Patentansprüche**

1. Trennmembran-Reinigungsmittel, das wenigstens eine Hydroxydicarbonsäure, die aus der Gruppe ausgewählt ist, die aus Äpfelsäure, Weinsäure, Tartronsäure, Citramalsäure, Dioxymaleinsäure und Dioxymalonsäure besteht, Wasserstoffperoxid und eine Schwermetallverbindung umfasst,

   wobei die Menge der Hydroxydicarbonsäure $1 \times 10^{-1}$ bis $1 \times 10^4$ mol pro Mol der Schwermetallverbindung beträgt,

   wobei die Menge des Wasserstoffperoxids in einen Bereich von $1 \times 10^{-3}$ bis $1 \times 10^1$ mol/l fällt,

   wobei die Menge der Schwermetallverbindung in einen Bereich von $1 \times 10^{-5}$ bis $1 \times 10^2$ mol pro Mol Wasserstoffperoxid fällt,

   wobei die Menge der Hydroxydicarbonsäure $1 \times 10^{-4}$ bis $1 \times 10^2$ mol pro Mol Wasserstoffperoxid beträgt und

   wobei das Reinigungsmittel einen pH-Wert von 2 bis 3 aufweist.

2. Reinigungsmittel gemäß Anspruch 1, wobei die Schwermetallverbindung wenigstens eine Verbindung ist, die aus der Gruppe ausgewählt ist, die aus Chloriden, Sulfiden und Oxiden von Fe, Mn, Co, Ni, Ti und Cu besteht.

3. Verfahren zur Herstellung des Trennmembran-Reinigungsmittels gemäß Anspruch 1, umfassend das Mischen von Wasserstoffperoxid, einer Schwermetallverbindung und wenigstens einer Hydroxydicarbonsäure, die aus der Gruppe ausgewählt ist, die aus Äpfelsäure, Weinsäure, Tartronsäure, Citramalsäure, Dioxymaleinsäure und Dioxymalonsäure besteht,
wobei die Menge der Hydroxydicarbonsäure 1 x 10$^{-1}$ bis 1 x 10$^4$ mol pro Mol der Schwermetallverbindung beträgt,
wobei die Menge des Wasserstoffperoxids in einen Bereich von 1 x 10$^{-3}$ bis 1 x 10$^1$ mol/l fällt,
wobei die Menge der Schwermetallverbindung in einen Bereich von 1 x 10$^{-5}$ bis 1 x 10$^2$ mol pro Mol Wasserstoffperoxid fällt,
wobei die Menge der Hydroxydicarbonsäure 1 x 10$^{-4}$ bis 1 x 10$^2$ mol pro Mol Wasserstoffperoxid beträgt.

4. Verfahren zur Herstellung eines Reinigungsmittels für eine Trennmembran gemäß Anspruch 3, wobei das Wasserstoffperoxid hinzugefügt wird, nachdem die Schwermetallverbindung in Wasser gelöst wurde.

5. Verfahren zum Reinigen einer Trennmembran, umfassend das In-Kontakt-Bringen des Reinigungsmittels gemäß einem der Ansprüche 1 und 2 und Wasser mit der zu reinigenden Trennmembran.

6. Reinigungsverfahren gemäß Anspruch 5, wobei die Trennmembran eine poröse Membran ist, die ein Polyvinylidenfluoridharz enthält.

7. Reinigungsverfahren gemäß Anspruch 5, wobei der Kontaktschritt nach wenigstens einem Verfahren durchgeführt wird, das aus der Gruppe ausgewählt ist, die aus Dead-End-Filtrationsreinigung, Recycle-Filtrationsreinigung, Recycle-Nichtpermeationsreinigung, Tauchreinigung, Rückspülreinigung, Rückspültauchreinigung und simultaner Luftreinigung besteht.


## Revendications

1. Agent nettoyant pour membrane de séparation comprenant au moins un acide hydroxydicarboxylique choisi dans le groupe constitué par l'acide malique, l'acide tartrique, l'acide tartronique, l'acide citramalique, l'acide dioxymaléique et l'acide dioxymalonique ; du peroxyde d'hydrogène et un composé de métal lourd,
dans lequel la quantité d'acide hydroxydicarboxylique est de 1 x 10$^{-1}$ à 1 x 10$^4$ moles par mole du composé de métal lourd,
dans lequel la quantité de peroxyde d'hydrogène est comprise dans un intervalle allant de 1 x 10$^{-3}$ à 1 x 10$^1$ mol/L ;
dans lequel la quantité de composé de métal lourd est comprise dans un intervalle allant de 1 x 10$^{-5}$ à 1 x 10$^2$ moles par mole de peroxyde d'hydrogène ;
dans lequel la quantité d'acide hydroxydicarboxylique est de 1 x 10$^{-4}$ à 1 x 10$^2$ moles par mole de peroxyde d'hydrogène ; et
où l'agent nettoyant a un pH de 2 à 3.

2. Agent nettoyant selon la revendication 1, dans lequel le composé de métal lourd est au moins un composé choisi dans le groupe constitué par les chlorures, les sulfures et les oxydes de Fe, Mn, Co, Ni, Ti et Cu.

3. Procédé de préparation de l'agent nettoyant pour membrane de séparation tel que défini dans la revendication 1, comprenant le mélange du peroxyde d'hydrogène, d'un composé de métal lourd et d'au moins un acide hydroxydicarboxylique choisi dans le groupe constitué par l'acide malique, l'acide tartrique, l'acide tartronique, l'acide citramalique, l'acide dioxymaléique et l'acide dioxymalonique,
dans lequel la quantité d'acide hydroxydicarboxylique est de 1 x 10$^{-1}$ à 1 x 10$^4$ moles par mole du composé de métal lourd,
dans lequel la quantité de peroxyde d'hydrogène est comprise dans un intervalle allant de 1 x 10$^{-3}$ à 1 x 10$^1$ mol/L ;
dans lequel la quantité de composé de métal lourd est comprise dans un intervalle allant de 1 x 10$^{-5}$ à 1 x 10$^2$ moles par mole de peroxyde d'hydrogène ;
dans lequel la quantité d'acide hydroxydicarboxylique est de 1 x 10$^{-4}$ à 1 x 10$^2$ moles par mole de peroxyde d'hydrogène.

4. Procédé de préparation d'un agent nettoyant pour membrane de séparation selon la revendication 3, dans lequel le peroxyde d'hydrogène est ajouté après avoir dissous le composé de métal lourd dans l'eau.

5. Procédé de nettoyage d'une membrane de séparation, comprenant l'étape qui consiste à mettre l'agent nettoyant tel que défini dans l'une quelconque des revendications 1 et 2 et de l'eau en contact avec la membrane de séparation à nettoyer.

**6.** Procédé de nettoyage selon la revendication 5, dans lequel la membrane de séparation est une membrane poreuse contenant une résine de fluorure de polyvinylidène.

**7.** Procédé de nettoyage selon la revendication 5, dans lequel l'étape de mise en contact s'effectue par au moins un procédé choisi dans le groupe constitué par le nettoyage par filtration frontale, le nettoyage par filtration à recyclage, le nettoyage sans perméation à recyclage, le nettoyage par immersion, le nettoyage à contre-courant, le nettoyage par immersion à contre-courant et le nettoyage à l'air simultané.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10277568 A
- JP 2000126560 A
- EP 1652571 A